(19) **Europäisches Patentamt / European Patent Office / Office européen des brevets**

(11) **EP 2 434 468 B1**

(12) **EUROPEAN PATENT SPECIFICATION**

(45) Date of publication and mention
of the grant of the patent:
**06.07.2016 Bulletin 2016/27**

(51) Int Cl.:
*G08G 1/16* *(2006.01)*

(21) Application number: **11182120.3**

(22) Date of filing: **21.09.2011**

(54) **Assistance system for a vehicle to generate overtaking instructions**

Hilfssystem für ein Fahrzeug zur Erzeugung von Überholanweisungen

Système d'assistance pour véhicule afin de générer les instructions de dépassement

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.09.2010 SE 1050999**

(43) Date of publication of application:
**28.03.2012 Bulletin 2012/13**

(73) Proprietor: **Scania CV AB
151 87 Södertälje (SE)**

(72) Inventor: **Backlund, Tomas
151 46 Södertälje (SE)**

(74) Representative: **Scania CV AB
Patents, GP 117kv
151 87 Södertälje (SE)**

(56) References cited:
**WO-A1-2006/037360**

- **Technical Committee: "Car 2 Car Communication Consortium Manifesto - Overview of the C2C-CC System", Car 2 Car , 28 August 2007 (2007-08-28), pages 1-94, XP002665680, Retrieved from the Internet: URL:http://elib.dlr.de/48380/1/C2C-CC_manifesto_v1.1.pdf [retrieved on 2011-12-09]**

## Description

Field of the invention

The present invention relates to an assistance system for a vehicle according to the preamble of the independent claim.

Background to the invention

There is constantly ongoing work to improve traffic safety, comprising inter alia use of intelligent assistance systems which make it easier for vehicle drivers to take account of the surroundings when driving. Such systems comprise inter alia cruise control systems catering for the topography of the road ahead, and lane departure warning systems which monitor the vehicle's position on the road.

These systems are implementable both in heavy vehicles, e.g. trucks and buses, and in cars. One of the differences between driving a heavy vehicle and driving a car pertains to the ratio between the vehicle's weight and power output. A car often has a large power output surplus and is often able to maintain its desired speed even in hilly terrain, unlike a heavy vehicle which has a small power output relative to its weight. It is therefore often difficult for a truck driver to know whether it is appropriate to overtake another truck, e.g. uphill on a motorway, which might lead to an undesirable traffic situation in which the trucks block both lanes.

There are various proposals for making things easier for the driver. US 2008/0027607 refers to a system for making it easier to overtake which takes into account inter alia the speeds of the vehicles involved.

EP 2,169,649 refers to an assisting system for helping a driver to plan an overtaking manoeuvre. The system takes into account the intended itinerary for the vehicle which is to be overtaken. This is communicated wirelessly between the two vehicles.

WO 2006/037360 refers to a driver information system for information on the possibility of carrying out overtaking manoeuvres, wherein inter-vehicle communication may be used to obtain data relevant for judging if an overtaking manoeuvre is suitable.

As mentioned above, it is sometimes not possible, particularly for heavy vehicles, to maintain constant speed uphill, which may result in problems in relation to overtaking. The object of the present invention is to propose an improved system which makes it easier to plan overtaking and assess whether overtaking another heavy vehicle is possible, which system is particularly suited to heavy vehicles.

Summary of the invention

The above objects are achieved with the invention defined by the independent claim.

Preferred embodiments are defined by the dependent claims.

The description of the invention pertains primarily to the assistance system being provided in a heavy vehicle, e.g. a truck or a bus, but it may also be provided with advantage in a lighter vehicle, e.g. a car.

The solution according to the invention is based on calculations which cover current vehicle speed, maximum power output or maximum torque, weight and location of both vehicles, and result in an estimate of their mean speeds at a given distance ahead. The distance comes from, for example, a so-called "look-ahead" function which expresses the topography of the road for a certain distance ahead of the vehicle, e.g. 2 km.
The locations of the vehicles and their estimated speeds serve as a basis for calculating how far apart the vehicles will be when they have travelled the given distance. This may for example reveal that the vehicle behind will have passed the vehicle ahead by 100 m. This distance may then be used to assess whether an overtaking manoeuvre is appropriate.

An advantage of the function according to the invention is that it provides an estimate of how far apart the vehicles will be at a given distance ahead in real time irrespective of whether the road is flat, uphill or downhill.

The system comprises preferably a display unit adapted to indicating visually to the driver whether the system considers that an overtaking manoeuvre is or is not feasible.

Brief description of drawings

Figure 1 is a schematic diagram illustrating an application of the present invention.
Figure 2 is a block diagram illustrating the present invention.
Figures 3 and 4 are graphs illustrating the present invention.

Detailed description of preferred embodiments of the invention

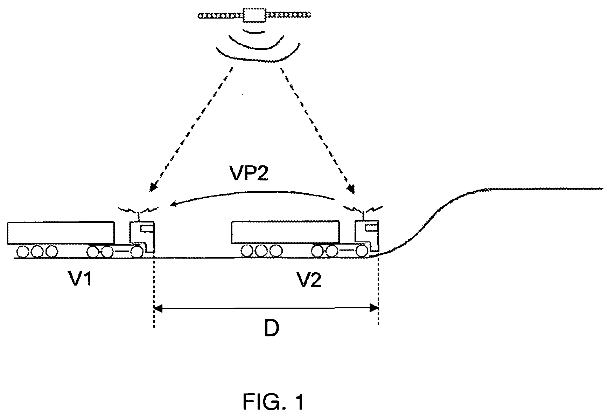

Figure 1 depicts an imaginary scenario in which a truck V1 approaches a truck V2 from behind and is likely to wish to overtake uphill. According to the invention, a communication link is established between the vehicles, and vehicle parameters VP2 are transmitted to the first truck V 1. The diagram also includes arrows indicating that both trucks receive location signals via GPS. The distance D between the vehicles is illustrated as the distance between their respective forward portions.

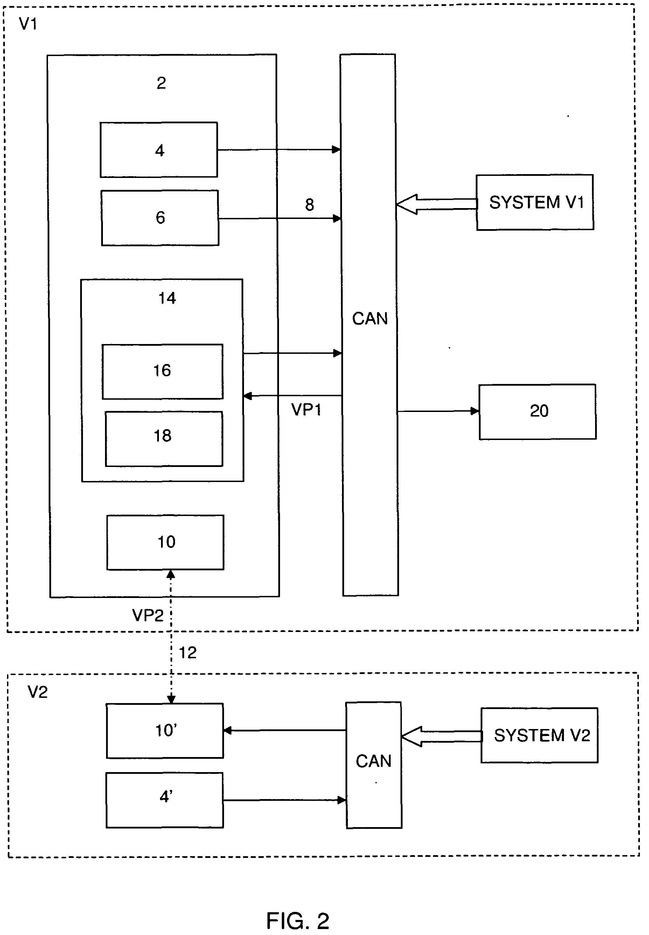

The invention will now be described in detail with reference to the block diagram in Figure 2.

The assistance system 2 according to the invention is adapted to being fitted in a vehicle V1. The system comprises a position module 4 adapted to determining the vehicle's current location which is delivered in the form of a location signal to the vehicle's CAN (controller area network) bus. The system further comprises a map module 6 containing map data and adapted to delivering to the CAN bus a map signal 8 containing information which in conjunction with the location signal defines a future horizon with a predetermined length for a section of road ahead of the vehicle.

In conjunction with information from the position module, e.g. a GPS receiver, the horizon is built up for a section of road ahead comprising small segments each about 20 metres long. Each segment comprises a gradient and an altitude but may also comprise relevant information such as bends, speed limits and road markings. The total length of a horizon depends on available memory capacity. When the vehicle is travelling forwards, the module will add fresh segments and delete past segments so that the total length of the horizon is always the same.

According to the present invention, the map module and the GPS receiver in the form of the position module are depicted in Figure 2 as separate modules but may be combined as a single module. Moreover, according to a variant, the position module may be a separate module while the map module forms part of an overtaking module 14.

The assistance system further comprises a communication module 10 adapted to identifying a vehicle V2 and to establishing with it a communication link 12 for transmitting and receiving information according to a predetermined communication protocol. The communication between the vehicles is preferably by an expanded version of the standard WLAN protocol IEEE 802.11 ITS (Intelligent Transport Systems) known as IEEE 802.11p which operates within the 5.9 GHz frequency band and is dedicated to ITS. A substantial difference compared with ordinary WLANs is that this protocol needs no central unit for communicating, because when one node makes contact with another they will automatically establish a connection. Other protocols for communication between the vehicles are of course possible within the scope of the present invention, e.g. ordinary WLAN 802.11g, various mobile networks (e.g. GPRS, 3G, 4g) and millimetre wave communication.

Each vehicle is provided with a transmitting and receiving unit which continually searches the surroundings for another vehicle with a similar unit. If another vehicle is detected, a two-way communication link is established between the vehicles and exchanges of information can take place. A typical maximum distance for establishing contact between the vehicles may be of the order of 500-600 metres.

The assistance system comprises according to the invention an overtaking module 14 comprising a calculation unit 16 and a memory unit 18 such that the overtaking module is adapted to receiving from the CAN bus a first set of vehicle parameters VP1 for the driver's vehicle V1. The vehicle parameters VP1 comprise at least the vehicle's total weight, speed and location and one or more parameters related to its engine power. The parameters related to the vehicle's engine power are available on the CAN bus as indicated by a hollow arrow from system V1 which represents inter alia the engine of vehicle V1.

The communication module 10 is adapted to receiving from vehicle V2 a second set of vehicle parameters VP2 comprising at least the vehicle's total weight, speed and location and one or more parameters relating to its engine power, and to transmitting these vehicle parameters to said overtaking module. A consequent prerequisite for the assistance system according to the invention to work is that vehicle V2 be provided with a communication module 10' adapted to communicating with the communication module 10 in vehicle V1 and to transmitting the vehicle parameters VP2 via the communication link 12. It is also necessary for there to be in V2 a position module 4' and preferably a CAN bus which passes on relevant parameters from systems in V2 to the communication module 10'.

The overtaking module 14 is adapted to determining that said vehicle V2 is a vehicle ahead. This is done by, for example, comparing the locations and directions of movement of the vehicles. Both kinds of information are obtained from the position module.

If it is found that the vehicle V2 is a vehicle ahead, the calculation unit 16 in the overtaking module 14 is adapted to continuously calculating the distance D between the driver's vehicle and the vehicle ahead at one or more predetermined locations for the driver's vehicle, based on the vehicle parameters VP1 and VP2.

The distance D is therefore zero when the vehicles are side by side. As the lengths of the vehicles are known, it is easy to calculate the distance between the forward portion of the vehicle behind and the rear portion of the vehicle ahead.

The calculated distance D is stored continuously in said memory unit 18. The calculation unit is further adapted to analysing how D changes over time and the overtaking module is adapted to generating overtaking instructions based on the analysis and intended for presentation to the driver of vehicle V1. The overtaking instructions may for example be presented via the information cluster 20, e.g. via a display.

The assistance system according to the invention is used to calculate the distance $D_H$ between the vehicles one horizon ahead of vehicle V1 by the equation

$$D_H = \left( \left( \frac{s2}{t2} * t1 \right) - s1 \right) - D_P$$

in which

$D_H$ is the distance between the vehicles at the end of the horizon,

$D_P$ the current distance between the vehicles,

S1 the distance travelled by vehicle V1 during time t1, and

S2 the distance travelled by vehicle V2 during time t2.

The equation is explained in detail below.

The distance between the vehicles calculated by the equation is that at the end of the horizon. The end of the horizon is as far ahead of vehicle V1 as the distance D can be calculated. It is of course possible, as discussed below, to opt to calculate the distance between the vehicles at a point ahead of vehicle V1 which is nearer than the end of the horizon, within for example the range 400-700 metres, e.g. 600 metres.

According to a preferred embodiment, said predetermined future location for the driver's vehicle is within the range 1.5-2 km, preferably 2 km.

According to a further embodiment, it is of course possible to opt to calculate the distance between the vehicles at more than one future location, e.g. at 600 metres and 2 km.

According to a preferred embodiment, the calculation unit analyses the calculated distance values between the vehicles and, if the distance between them becomes zero, it determines their location at which such is the case.

According to an embodiment, said parameter related to the vehicle's engine power is the engine's maximum power output.

According to another embodiment, said parameter related to the vehicle's engine power is the maximum torque which the vehicle's powered wheels generate. These two embodiments are explained further on.

The overtaking module 14 is adapted to determining that said vehicle V2 is a vehicle ahead, in which case the calculation unit in the overtaking module is adapted to continuously calculating the distance D between the driver's vehicle and the vehicle ahead at one or more predetermined future locations of the driver's vehicle, based on the vehicle parameters VP1 and VP2.

A number of limit values indicating the distance between the vehicles after a predetermined number of metres may be set, inter alia to enable an overtaking manoeuvre to take place safely.

An example of a limit value might be that the overtaking vehicle should be 100 metres ahead of the vehicle overtaken after two kilometres of driving from current location for the driver of vehicle V1 to be given the instructions that overtaking is feasible. Another limit value might be that if the vehicle is only 50 metres ahead of the overtaken vehicle after two kilometres of driving from current location the instruction that overtaking is not appropriate is given.

The invention is particularly applicable in relation to driving on hills, but there are situations in driving on level roads where the invention may provide the driver with valuable information. Such a situation is where there is a change ahead in the number of traffic lanes, e.g. where two lanes merge to become a single lane one kilometre from current location.

The present invention may also make things easier for the driver when driving downhill, e.g. if an overtaking vehicle is heavier its speed might well increase downhill.

The assistance system may with advantage be implemented in the vehicle's computer, e.g. by means of C code.

The main task is to calculate the speed or time required to travel the distance defined by the length of the horizon. The speed depends on the balance of forces which act upon the vehicle, viz. the air resistance, the friction between wheels and road, the resistance when driving uphill and the opposite downhill, and the power generated by the engine. There are two different ways of calculating this power, either on the basis of the maximum torque which the engine can generate or on the basis of the maximum power output.

The maximum torque which the vehicle's powered wheels generate is determined by the maximum torque which the engine generates being known and by arriving at the torque of the powered wheels by multiplying by the total gear ratio of the power train. An advantage of using the maximum torque is that the torque curve is relatively constantly at the speeds at which the engine most commonly runs. A disadvantage may be that the power on the powered wheels depends on the gear ratio, which is likely to change on steep hills, a factor which affects the calculations and has to be catered for.

Using instead the maximum power output affords the advantage of it being the same for the whole power train apart from minor friction losses. The maximum power output occurs at high engine speeds, which may for example mean that on moderate climbs the propulsive force may possibly be overestimated.

The calculations are based on a simplified vehicle model, e.g. disregarding the power train's moment of inertia which in this context is of little significance in that the vehicle's weight is dominant in high gears. Nor do the calculations take into account the losses along the power train.

The model comprises equations for the rolling resistance, the air resistance and the resistance on hills. As mentioned above, there are two ways of calculating the propulsive force imparted by the engine.

The force of gravity results in a perpendicular force on which the rolling resistance depends, and a force when travelling on hills, which most affects the total resistance on steep hills.

To sum up, this means that the time derivative for the amount of movement is of the nature of

$$F_{eng} - F_{air} - F_{roll} - F_{slope}$$

in which

$F_{eng}$ is the propulsive force calculated on the basis of power output or torque,

$F_{air}$ the air resistance,
$F_{roll}$ the rolling resistance, and
$F_{slope}$ the resistance on hills.

As this relationship is time-dependent, the speed of a vehicle at the beginning and end of a horizon of known length can be calculated.

Calculating the distance between the vehicles will now be described in detail. The calculation uses an algorithm which arrives at a calculated distance between two vehicles at any desired point ahead of the rear vehicle. The location of that point is limited by the length of the horizon which is covered by the map module and which is also used by intelligent cruise controls, which future horizon includes information about road gradients. According to an embodiment the future horizon is 2 km, but according to another embodiment it is 600 metres.

The algorithm approximates the time t1 which is determined by the mean speed during all the segments within the horizon, which is the time the driver's vehicle, vehicle V1, takes to travel from the nearest segment to the furthest segment within the horizon. The same calculation is done for the vehicle ahead, vehicle V2, which is a known distance $D_P$ ahead of vehicle V1. This calculation starts from the segment nearest to V2 and is done for the whole of V2's horizon, resulting in a time t2 which is therefore the time which V2 needs to travel the whole horizon.

These calculated times may be used to calculate the distance $D_H$ between vehicles V1 and V2 at the end of the horizon. A fresh calculation is then done after a predetermined period of time which may be of the order of one or a few seconds. The algorithm thus delivers in real time a freshly estimated distance $D_H$ at the location one horizon ahead of vehicle V1.

The distance $D_H$ between the vehicles one horizon ahead of vehicle V1 is calculated by the equation

$$D_H = \left(\left(\frac{s2}{t2} * t1\right) - s1\right) - D_P$$

in which

$D_H$ is the distance between the vehicles at the end of the horizon,
$D_P$ the current distance between the vehicles,
S1 the distance travelled by vehicle V1 during time t1, and
S2 the distance travelled by vehicle V2 during time t2.

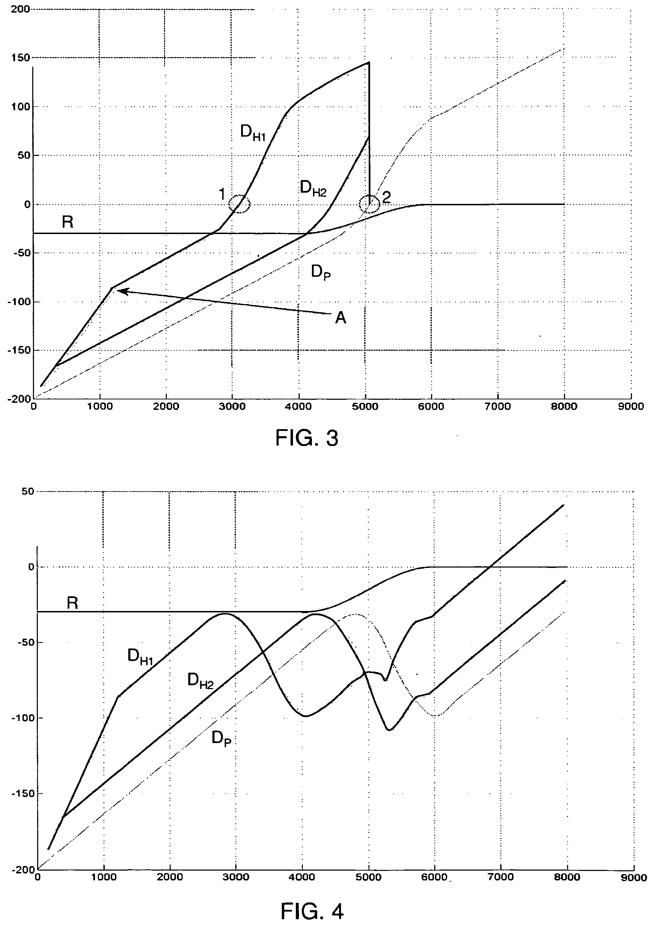

The equation thus calculates the distance S2 which vehicle V2 would have travelled at its mean speed during the same time as vehicle V1 has travelled. S1 is then subtracted from this distance to arrive at the distance between the vehicles if they started from the same point. Therefore the current distance between the vehicles $D_p$ is then subtracted from this distance. The distance between the vehicles therefore becomes negative when vehicle V1 is behind vehicle V2, as depicted in Figures 3 and 4.

The vehicle parameters VP2 required from vehicle V2 ahead are
the vehicle's total weight,
the vehicle's speed,
the vehicle's location, and
one or more parameters related to the vehicle's engine power, e.g. maximum power output or maximum torque.

Vehicle weight is an important parameter and may inter alia be determined by input data from various systems of the vehicle, e.g. the brake system, the cruise control and other systems. It is also possible to determine the vehicle's weight by measuring the pressure on its various axles.

Information about the engine's maximum torque is available via CAN as a reference value for other torque values for the engine which form part of this reference value.

The engine's maximum power output may be calculated on the basis of information about its torque at the engine speed at which the engine delivers maximum power output.

The vehicle's speed is available via CAN.

The equation includes the current distance $D_p$ between the vehicles, which may be calculated on the basis of their locations determined by GPS measurement.

Figure 3 depicts a simulation with the two vehicles illustrated in Figure 1.
The y axis denotes the distance between the vehicles in metres. A negative distance means that vehicle V1 is behind vehicle V2. When the vehicles are side by side, the distance between them is therefore zero. The x axis denotes the length of the section of road in metres.
The vehicles travel along a 9 km section designated R with a 2 km long upgrade.
The distance between them is represented by the curve $D_p$ (current distance) and is initially -200 m.
The two vehicles have the same maximum power output but differ greatly in weight. The vehicle ahead weighs 50 tonnes and the vehicle behind 30 tonnes. The vehicle behind maintains a somewhat higher speed causing the distance between the vehicles to continually decrease. The line designated $D_{H1}$ represents the function's estimate of the distance between the vehicles 2 km ahead. For example, after about 3000 m the function estimates that the vehicles will be side by side, which is illustrated by the circle marked "1". At the circle marked "2" it may be seen that the distance then actually became 0 m after 5 km of driving. The driver of the vehicle behind may thus, even before the hill, be informed that the distance will continue to decrease uphill and that overtaking may be appropriate.

The diagram also has a second line $D_{H2}$ representing the function's estimate of the distance between the vehicles 600 metres ahead.

The arrow marked A points at the location where the function has built up enough information to indicate the distance between the vehicles 2 km ahead of vehicle V1, i.e. when the initialisation has ended.

Figure 4 illustrates a scenario in which the vehicle weights are reversed such that the vehicle behind is now the heavier. The same notations are used as in Figure 3. In this case it is seen that the distance between the vehicles will instead begin to increase again when they start to climb and the driver of the vehicle behind may then dispense with commencing an overtaking manoeuvre.

The present invention is not restricted to the preferred embodiments described above. Sundry alternatives, modifications and equivalents may be used. The embodiments described above are therefore not to be regarded as limiting the invention's protective scope which is defined by the attached claims.

Reference notations

| | |
|---|---|
| 2 | assistance system |
| 4 | position module |
| 6 | map module |
| 8 | map signal |
| 10 | communication module |
| 12 | communication link |
| 14 | overtaking module |
| 16 | calculation unit |
| 18 | memory unit |
| 20 | instrument cluster |

**Claims**

1. An assistance system (2) situated in a vehicle V1, which system comprises a position module (4) adapted to determining the vehicle's current location,
a map module (6) containing map data and adapted to delivering a map signal (8) comprising information which defines a future horizon with a predetermined length for a future section of road for the vehicle, wherein the end of the horizon being as far ahead of the vehicle V1 as a distance D can be calculated by the assistance system, and
a communication module (10) adapted to identifying a vehicle V2 and to establishing a communication link (12) with said vehicle for transmitting and receiving information according to a predetermined communication protocol,
**characterised in that** the assistance system further comprises an overtaking module (14) comprising a calculation unit (16) and a memory unit (18) and adapted to receiving a first set of vehicle parameters VP1 for the driver's vehicle V1, which parameters comprise at least the vehicle's total weight, speed and location and one or more parameters related to its engine power,
the communication module (10) is adapted to receiving from vehicle V2 a second set of vehicle parameters VP2 which comprise at least the vehicle's total weight, speed and location and one or more parameters related to its engine power, and to conveying these vehicle parameters to said overtaking module,
the overtaking module (14) is adapted to determining that said vehicle V2 is a vehicle ahead, in which case the calculation unit (16) in the overtaking module is adapted to continuously calculating the distance D between the driver's vehicle and the vehicle ahead at one or more predetermined future locations for the driver's vehicle, based on the vehicle parameters VP1 and VP2,
the calculated distances D are stored continuously in said memory unit (18),
the calculation unit (16) is further adapted to analysing how D changes at any desired point ahead of the vehicle V1 limited by the length of the horizon which is covered by the map module (6),
and the overtaking module (14) is adapted to generating overtaking instructions based on the analysis and intended to be presented to the driver of vehicle V1.

2. An assistance system according to claim 1, in which the distance $D_H$ between the vehicles one horizon ahead of vehicle V1 is calculated by the equation

$$D_H = \left( \left( \frac{s2}{t2} * t1 \right) - s1 \right) - D_P$$

in which

$D_H$ is the distance between the vehicles at the end of the horizon,
$D_P$ the current distance between the vehicles,
S1 the distance travelled by vehicle V1 during time t1, and
S2 the distance travelled by vehicle V2 during time t2.

3. An assistance system according to claim 1 or 2, in which said analysis establishes whether the distance between the vehicles becomes zero, in which case the analysis determines the location for the vehicles where this occurs.

4. An assistance system according to any one of claims 1-3, in which said parameter related to the vehicle's engine power is the engine's maximum power output.

**5.** An assistance system according to any one of claims 1-3, in which said parameter related to the vehicle's engine power is the maximum torque which its powered wheels generate.

**6.** An assistance system according to any one of claims 1-5, in which said map data comprise information about road gradients, changes in the traffic lane divisions, and speed limit changes.

**7.** An assistance system according to any one of claims 1-6, in which said predetermined future location for the driver's vehicle is within the range 400-700 metres, preferably 600 metres.

**8.** An assistance system according to any one of claims 1-6, in which said predetermined future location for the driver's vehicle is within the range 1.5-2 km, preferably 2 km.

**9.** An assistance system according to any one of claims 1-6, in which said predetermined future locations for the driver's vehicle are 600 m and 2 km.

**10.** An assistance system according to claims 1-9, in which said predetermined communication protocol is WLAN according to IEEE 802.11p.

**Patentansprüche**

**1.** Assistenzsystem (2), angeordnet in einem Fahrzeug V1, wobei das System umfasst ein Positionsmodul (4), das geeignet ist, um die momentane Position des Fahrzeugs zu bestimmen, ein Kartenmodul (6), das Kartendaten beinhält und geeignet ist, um ein Kartensignal (8) zu übertragen, umfassend Informationen, die für das Fahrzeug einen vorausliegenden Horizont mit einer vordefinierten Länge für einen vorausliegenden Streckenabschnitt definieren, wobei das Ende des Horizonts soweit vor dem Fahrzeug V1 liegt, wie eine Entfernung D, die vom Assistenzsystem berechnet werden kann, und ein Kommunikationsmodul (10), das geeignet ist, um ein Fahrzeug V2 zu identifizieren und um eine Kommunikationsverbindung (12) zum Fahrzeug aufzubauen, um Informationen gemäß einem vordefinierten Kommunikationsprotokoll zu senden und zu empfangen, **dadurch gekennzeichnet, dass** das Assistenzsystem weiter umfasst ein Überholmodul (14) umfassend eine Berechnungseinheit (16) und eine Speichereinheit (18) und dazu geeignet, um einen ersten Satz von Fahrzeugparametern VP1 für das Fahrzeug des Fahrers V1 zu empfangen, dessen Parameter zumindest Gesamtgewicht, Geschwindigkeit, Standort und einen oder mehrere Parameter über die Motorleistung des Fahrzeugs umfassen,

wobei das Kommunikationsmodul (10) geeignet ist, um vom Fahrzeug V2 einen zweiten Satz von Fahrzeugparametern VP2 zu empfangen, die zumindest Gesamtgewicht, Geschwindigkeit, Standort und einen oder mehrere Parameter über die Motorleistung des Fahrzeugs umfassen, und um diese Parameter an das besagte Überholmodul zu übermitteln, wobei das Überholmodul (14) geeignet ist, um festzustellen, dass das Fahrzeug V2 ein vorausfahrendes Fahrzeug ist, wobei in diesem Fall die Berechnungseinheit (16) in dem Überholmodul dazu geeignet, um dauerhaft den Abstand D zwischen dem Fahrzeug des Fahrers und dem vorrausfahrendem Fahrzeug für einen oder mehrere vordefinierte vorausliegende Standorte des Fahrzeugs des Fahrers basierend auf den Fahrzeugparametern VP1 und VP2 zu berechnen, wobei die berechneten Abstände D fortlaufend in der besagten Speichereinheit (18) gespeichert werden, wobei die Berechnungseinheit (16) weiter geeignet ist, um zu analysieren, wie sich D an jedem gewünschten Punkt vor dem Fahrzeug V1 verändert, begrenzt durch die Entfernung zum Horizont, die vom Kartenmodul (6) abgedeckt ist, und wobei ein Überholmodul (14) dazu geeignet, um Überholanweisungen zu generieren, basierend auf der Analyse und dazu bestimmt, um dem Fahrer des Fahrzeugs V1 präsentiert zu werden.

**2.** Assistenzsystem nach Anspruch 1, wobei die Entfernung $D_H$ zwischen den Fahrzeugen einen Horizont vor dem Fahrzeug V1 mit der Formel berechnet wird

$$D_H = \left( \begin{pmatrix} \frac{s_2}{t_2} * t_1 \end{pmatrix} \quad s_1 \right) \quad D_P$$

wobei

$D_H$ die Entfernung zwischen den Fahrzeugen am Ende des Horizonts ist,
$D_P$ der momentane Abstand zwischen den Fahrzeugen ist,
$s_1$ die von Fahrzeug V1 während der Zeit $t_1$ zurückgelegte Wegstrecke, und
$s_2$ die von Fahrzeug V2 während der Zeit $t_2$ zurückgelegte Wegstrecke.

**3.** Assistenzsystem nach Anspruch 1 oder 2, wobei die Analyse feststellt, ob die Entfernung zwischen den Fahrzeugen zu 0 wird, wobei in diesem Fall die Analyse den Standort der Fahrzeuge feststellt, wo dies eintritt.

**4.** Assistenzsystem nach einem der Ansprüche 1-3, wobei der sich auf die Motorleistung des Fahrzeugs beziehende Parameter die maximale Ausgangsleis-

**5.** Assistenzsystem nach einem der Ansprüche 1-3, wobei der sich auf die Motorleistung des Fahrzeugs beziehende Parameter das maximale Drehmoment ist, welche von seinen Antriebsrädern erzeugt wird.

**6.** Assistenzsystem nach einem der Ansprüche 1-5, wobei die Kartendaten Informationen über Fahrbahnsteigung, Veränderungen in der Fahrbahnspurenaufteilung und Veränderungen bei der Geschwindigkeitsbegrenzung umfassen.

**7.** Assistenzsystem nach einem der Ansprüche 1-6, wobei der vordefinierte vorausliegende Standort für das Fahrzeug des Fahrers im Bereich von 400 bis 700 Metern liegt, vorzugsweise bei 600 Meter.

**8.** Assistenzsystem nach einem der Ansprüche 1-6, wobei der vordefinierte vorausliegende Standort für das Fahrzeug des Fahrers im Bereich von 1.5 bis 2 km liegt, vorzugsweise bei 2 km.

**9.** Assistenzsystem nach einem der Ansprüche 1-6, wobei der vordefinierte vorausliegende Standort für das Fahrzeug des Fahrers 600 Meter und 2 km ist.

**10.** Assistenzsystem nach einem der Ansprüche 1-9, wobei das vordefinierte Kommunikationsprotokoll WLAN entsprechend IEEE 802.11p ist.

## Revendications

**1.** Système d'assistance (2) situé dans un véhicule V1, ce système comprenant un module de position (4) adapté de façon à déterminer l'emplacement actuel du véhicule, un module de carte (6) contenant des données de carte et adapté de façon à délivrer un signal de carte (8) comprenant une information qui définit un horizon futur avec une longueur prédéterminée pour une section de route future pour le véhicule, dans lequel l'extrémité de l'horizon, étant aussi éloigné en avant du véhicule V1 qu'une distance D, peut être calculé par le système d'assistance, et un module de communication (10) adapté de façon à identifier un véhicule V2 et à établir une liaison de communication (12) avec ledit véhicule pour transmettre et recevoir une information selon un protocole de communication prédéterminé, **caractérisé en ce que** le système d'assistance comprend de plus un module de dépassement (14) comprenant une unité de calcul (16) et une unité de mémoire (18), et adapté de façon à recevoir un premier jeu de paramètres de véhicule VP1 pour le véhicule V1 du conducteur, ces paramètres comprenant au moins le poids total, la vitesse et l'emplacement du véhicule et un ou plusieurs paramètres associés à sa puissance motrice,
le module de communication (10) est adapté de façon à recevoir depuis le véhicule V2 un deuxième jeu de paramètres de véhicule VP2, qui comprennent au moins le poids total, la vitesse et l'emplacement du véhicule et un ou plusieurs paramètres associés à sa puissance motrice, et à transmettre ces paramètres de véhicule audit module de dépassement,
le module de dépassement (14) est adapté de façon à déterminer que ledit véhicule V2 est un véhicule en avant, auquel cas l'unité de calcul (16) dans le module de dépassement est adaptée de façon à calculer de façon continue la distance D entre le véhicule du conducteur et le véhicule en avant en un ou plusieurs emplacements futurs prédéterminés pour le véhicule du conducteur, en fonction des paramètres de véhicule VP1 et VP2,
les distances calculées D sont mémorisées de façon continue dans ladite unité de mémoire (18),
l'unité de calcul (16) est de plus adaptée de façon à analyser la façon dont D change en tout point désiré en avant du véhicule V1 limité par la longueur de l'horizon qui est couvert par le module de carte (6), et le module de dépassement (14) est adapté de façon à générer des instructions de dépassement en fonction de l'analyse, destinées à être présentées au conducteur du véhicule V1.

**2.** Système d'assistance selon la revendication 1, dans lequel la distance $D_H$ entre les véhicules un horizon en avant du véhicule V1 est calculée par l'équation :

$$D_H = \left(\left(\frac{s2}{t2}*t1\right) - s1\right) - D_P$$

dans laquelle :

$D_H$ est la distance entre les véhicules à l'extrémité de l'horizon,
$D_P$ la distance actuelle entre les véhicules,
s1 la distance parcourue par le véhicule V1 durant le temps t1, et
s2 la distance parcourue par le véhicule V2 durant le temps t2.

**3.** Système d'assistance selon la revendication 1 ou 2, dans lequel ladite analyse établit si la distance entre les véhicules devient nulle, auquel cas l'analyse détermine l'emplacement des véhicules où ceci se produit.

**4.** Système d'assistance selon l'une quelconque des revendications 1 à 3, dans lequel ledit paramètre relatif à la puissance motrice du véhicule est la sortie de puissance maximale du moteur.

**5.** Système d'assistance selon l'une quelconque des revendications 1 à 3, dans lequel ledit paramètre relatif à la puissance motrice du véhicule est le couple maximal que génèrent ses roues motrices.

**6.** Système d'assistance selon l'une quelconque des revendications 1 à 5, dans lequel lesdites données de carte comprennent une information concernant des gradients de route, des changements dans les divisions de voies de circulation, et des changements de limite de vitesse.

**7.** Système d'assistance selon l'une quelconque des revendications 1 à 6, dans lequel ledit emplacement futur prédéterminé pour le véhicule du conducteur se trouve à l'intérieur de la plage comprise entre 400 et 700 mètres, et de préférence à 600 mètres.

**8.** Système d'assistance selon l'une quelconque des revendications 1 à 6, dans lequel ledit emplacement futur prédéterminé pour le véhicule du conducteur se trouve à l'intérieur de la plage comprise entre 1,5 et 2 km, et de préférence à 2 km.

**9.** Système d'assistance selon l'une quelconque des revendications 1 à 6, dans lequel lesdits emplacements futurs prédéterminés pour le véhicule du conducteur se trouvent à 600 m et à 2 km.

**10.** Système d'assistance selon les revendications 1 à 9, dans lequel ledit protocole de communication prédéterminé est WLAN selon la norme IEEE 802.11 p.

FIG. 1

FIG. 2

FIG. 3

FIG. 4

**EP 2 434 468 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080027607 A
- EP 2169649 A
- WO 2006037360 A